# EUROPEAN PATENT APPLICATION

(11) **EP 1 530 206 A2**
(43) Date of publication of application: **11.05.2005**
(21) Application number: 04026220.6
(22) Date of filing: 04.11.2004
(51) Int. Cl.: G11B 7/135

(54) **Optical head device having deformable reflecting mirror**

(30) Priority: 10.11.2003 JP 2003379942
(71) Applicant: Funai Electric Co., Ltd., Daito-shi, Osaka (JP)
(72) Inventor: Nagashima, Kenji Funai Electric Co., Ltd., Daito-shi Osaka (JP)
(74) Representative: Grünecker, Kinkeldey, Stockmair & Schwanhäusser Anwaltssozietät

(57) **Abstract**

In a mirror unit (4), for the purpose of correcting spherical aberration, a reflecting mirror (4a) is changed in form by a piezoelectric film (4c) to adjust a degree of parallelism of a reflected light. To correct the spherical aberration at an objective lens (5), the piezoelectric film (4c) changes the degree of parallelism of the reflected light to thereby change the angle of incidence of the reflected light onto the objective lens (5). As such, with the incident angle of the reflected light to the objective lens (5) being adjusted, the spherical aberration is controlled and corrected via the objective lens (5).

## Description

### BACKGROUND OF THE INVENTION

### Field of the Invention

The present invention relates to optical head devices, and more particularly to an optical head device provided with a reflecting mirror that can be changed in shape.

### Description of the Background Art

Rapid developments in multimedia technologies in recent years have greatly affected the trends toward information recording apparatuses of larger capacitance, faster operation speed, and reduced unit price with respect to information recording density. With improvement in performance of personal computers, rapid establishment of data communications such as the Internet, and the advent of VOD (Video On Demand), high-definition televisions and others, there has been an increasing demand for large-capacity information recording media capable of storing a great amount of data including moving pictures and audio signals in real time.

Magnetic recording apparatuses with existing hard disk drives (HDD) increased in recording density and capacity have been placed on the market to meet such a demand. With the magnetic recording method, however, the recording density is physically restricted, and it is extremely difficult to implement more than 10 giga bytes per square inch. In this regard, information recording apparatuses employing optical systems have become dominant as major auxiliary storage devices for personal computers, and they have been practically adapted to digital versatile disk (DVD) systems applicable to a broader multimedia environment.

In particular, the information recording apparatus of optical system ensures high response speed, non-contact pickup and others, and is particularly advantageous in that data can be stored densely to the extent of the wavelength range of a laser light source for recording/reproduction. Here, the increase in density of data means that the track pitch, which is an interval between data bits or between data tracks, is reduced to the extent of the wavelength range of the light source for recording/reproduction. As such, it is desirable that a laser beam for recording/reproduction can accurately be irradiated on a desired position on the track.

Upon irradiation of a disk, however, there may occur aberration due to an error in disk surface, lens or the like. In such a case, accurate irradiation would be difficult, possibly causing recording/reproduction failure. Therefore, an optical system that can correct the aberration amount to ensure accurate laser beam irradiation is required for a high-density optical information recording apparatus.

A specific example of such aberration is spherical aberration that occurs due to an error in disk thickness, design or the like. Japanese Patent Laying-Open No. 10-031107 discloses a way of correcting the aberration amount of spherical aberration at a mirror surface by making the mirror surface deformable.

In this publication, the thickness of the disk is detected and the aberration amount is obtained based on the detected result. In reality, however, an objective lens causes spherical aberration as well, due to an error in lens thickness, radius of curvature, lens interval or the like. Thus, it is necessary to correct the spherical aberration taking also account of the error in the objective lens.

Further, in the publication, the aberration amount is corrected at the mirror surface. However, the central axis of the objective lens and the central axis of the mirror surface may become out of alignment, since the objective lens follows the eccentricity of the disk. Thus, it is also necessary to correct the aberration in real time taking account of such misalignment. That is, in order to correct the aberration amount at the mirror surface in real time, high-speed and complicated (flexible) deformation thereof will be necessary.

### SUMMARY OF THE INVENTION

The present invention has been made to solve the above-described problems, and an object of the present invention is to provide an optical head device capable of correcting spherical aberration with a simple configuration.

According to an aspect of the present invention, an optical head device correcting spherical aberration includes: a light emitting diode emitting a laser light; a mirror driving unit for reflecting the laser light received from the light emitting diode; and a lens receiving a reflected light from the mirror driving unit and forming a light spot on a surface of a storage medium. The mirror driving unit includes a mirror reflecting the laser light, and a piezoelectric element provided in the mirror opposite to a surface reflecting the laser light and changing curvature of the mirror. The mirror driving unit adjusts an angle of incidence of the reflected light onto the lens such that spherical aberration is corrected at the lens when the lens forms the light spot. The device further includes: a detector detecting light intensity of the light returned from the lens; and a voltage applying circuit setting an applied voltage to be applied to the piezoelectric element based on the light intensity detected by the detector. The detector compares light intensity at and around a center of the returned light with light intensity in the periphery other than at and around the center, and instructs the voltage applying circuit to adjust the applied voltage based on a result of the comparison. The piezoelectric element is attached to the mirror to form a unimorph structure. The piezoelectric element is arranged in a circular shape on a surface of the mirror opposite to the surface reflecting the laser light, and expands/contracts in a radial direction to change the curvature of the mirror to set the reflected light to one of convergent light and divergent light.

According to another aspect of the present invention, an optical head device correcting spherical aberration includes: a light emitting diode emitting a laser light; a mirror driving unit for reflecting the laser light received from the light emitting diode; and a lens receiving a reflected light from the mirror driving unit and forming a light spot on a surface of a storage medium. The mirror driving unit includes a mirror reflecting the laser light, and a piezoelectric element provided to the mirror opposite to a surface reflecting the laser light to change curvature of the mirror. The mirror driving unit adjusts an angle of incidence of the reflected light onto the lens such that spherical aberration is corrected at the lens when the lens forms the light spot.

Preferably, the piezoelectric element is attached to the mirror to form a unimorph structure.

Still preferably, the piezoelectric element is arranged in a circular shape on a surface of the mirror opposite to the surface reflecting the laser light, and expands/contracts in a radial direction to change the curvature of the mirror.

Still preferably, the piezoelectric element changes the curvature of the mirror to set the reflected light to one of convergent light and divergent light.

Preferably, the optical head device further includes: a detector detecting light intensity of the light returned from the lens; and a voltage applying circuit setting an applied voltage to be applied to the piezoelectric element based on the light intensity detected by the detector.

Specifically, the detector compares light intensity at and around a center of the returned light with light intensity in the periphery other than at and around the center, and instructs the voltage applying circuit to adjust the applied voltage based on a result of the comparison.

The piezoelectric element changing curvature of the mirror is provided to change the angle of incidence of the reflected light onto the lens. As such, with the incident angle of the reflected light to the lens being adjusted, the spherical aberration is controlled via the lens. Accordingly, it is possible to correct the spherical aberration with a simple configuration making the curvature of the mirror changed.

The foregoing and other objects, features, aspects and advantages of the present invention will become more apparent from the following detailed description of the present invention when taken in conjunction with the accompanying drawings.

### BRIEF DESCRIPTION OF THE DRAWINGS

Fig. 1 schematically shows a configuration of an optical head device according to an embodiment of the present invention.
Fig. 2 schematically shows a configuration of a mirror unit according to an embodiment of the present invention.
Figs. 3A-3C are conceptual diagrams illustrating deformation of a reflecting mirror to which a piezoelectric film is attached.

### DESCRIPTION OF THE PREFERRED EMBODIMENTS

Hereinafter, embodiments of the present invention will be described in detail with reference to the drawings. Throughout the drawings, the same or corresponding portions are denoted by the same reference characters, and description thereof will not be repeated.

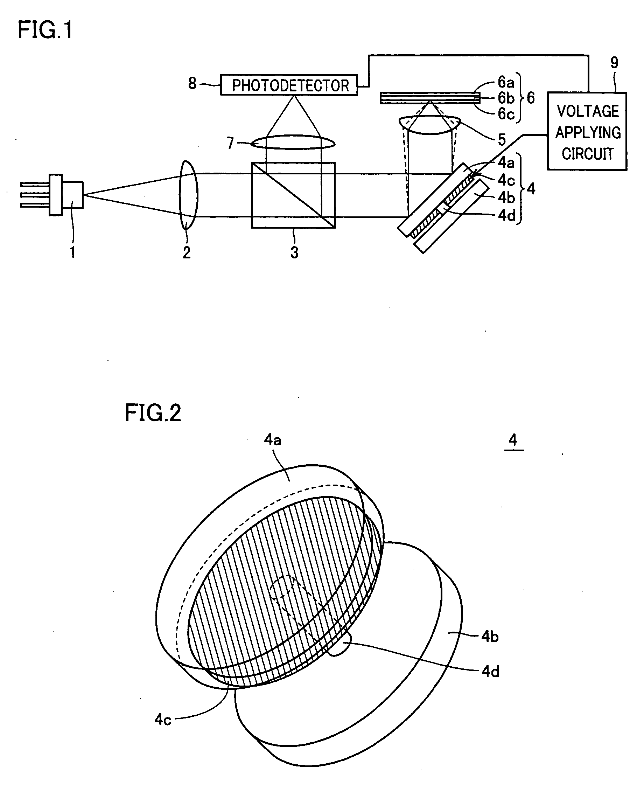

Referring to Fig. 1, an optical head device according to an embodiment of the present invention for a disk 6 includes a laser diode 1 as a light source, a collimator lens 2, a half prism 3, a mirror unit 4, an objective lens 5, a focusing lens 7, a photodetector 8, and a voltage applying circuit 9 setting a voltage to be applied to mirror unit 4 based on a detected result of photodetector 8. Disk 6 is formed of a reflecting film 6a reflecting an incident laser beam, a recording film 6b for recording data information, and a substrate 6c.

A laser beam emitted from laser diode 1 is received by collimator lens 2, where it is converted to parallel light and guided via half prism 3 to mirror unit 4. The parallel beam is reflected by mirror unit 4 onto objective lens 5, where it is converged to form a light spot on an arbitrary data bit position on recording film 6b of disk 6.

A certain amount of light is reflected back from disk 6. The returned reflected light is guided through objective lens 5, mirror unit 4, to half prism 3, where it is reflected onto focusing lens 7. The light having passed through focusing lens 7 is received by photodetector 8. Photodetector 8 detects light intensity of the returned reflected light to detect a reproduction signal at the arbitrary position of disk 6.

Fig. 2 schematically shows a configuration of mirror unit 4 according to an embodiment of the present invention.

Referring to Fig. 2, mirror unit 4 of the present embodiment includes a reflecting mirror 4a reflecting an incident laser beam, a securing member 4b for securing reflecting mirror 4a, a piezoelectric film 4c attached to a surface (back face) opposite to a reflecting surface (front face) of reflecting mirror 4a, and a support member 4d supporting reflecting mirror 4a.

Piezoelectric film 4c is attached in a circular shape to the back face of thin reflecting mirror 4a, constituting a so-called unimorph structure. The film expands and contracts in accordance with the applied voltage from voltage applying circuit 9. The piezoelectric film may be formed using ferroelectric thin film such as PZT ceramics, piezoelectric macromolecule such as polyvinylidene fluoride (PVDF), or the like.

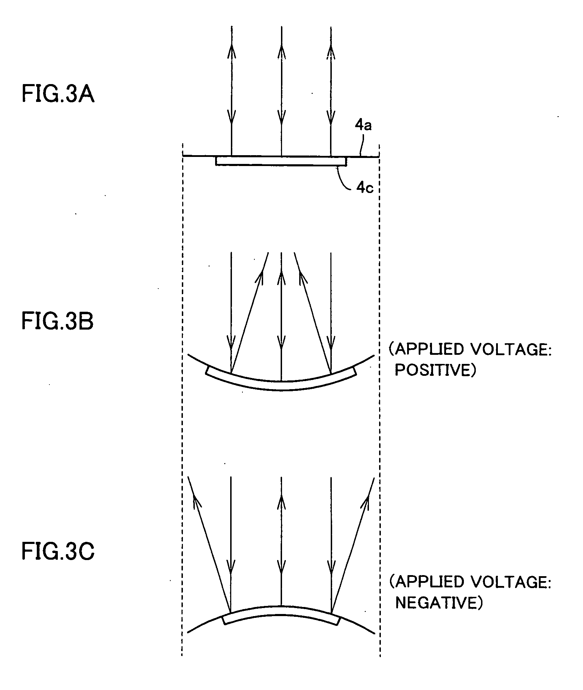

Figs. 3A-3C are conceptual diagrams illustrating deformation of reflecting mirror 4a attached with the piezoelectric film.

Fig. 3 A shows the initial state where reflecting mirror 4a has not be deformed, in which state the laser beam is reflected with the same degree of parallelism as the incident direction.

Fig. 3B shows the case where the piezoelectric film expands.

When a positive voltage is applied, the piezoelectric film expands. As the piezoelectric film expands in the radial direction, reflecting mirror 4a has its curvature changed in response to the tensile force, so that a concave portion is formed. Thus, the parallel incident light is converted to convergent light, with the degree of parallelism changed.

Fig. 3C shows the case where the piezoelectric film contracts.

When a negative voltage is applied, the piezoelectric film contracts. As the piezoelectric film contracts in the radial direction, reflecting mirror 4a has its curvature changed in response to the tensile force, and a convex portion is formed. Accordingly, the parallel incident light is converted to divergent light, with the degree of parallelism changed.

A way of correcting spherical aberration according to an embodiment of the present invention is now described.

Generally, when reflecting mirror 4a is not deformed as in the case of Fig. 3A, the incident light having been made to be parallel light by collimator lens 2 enters objective lens 5 as parallel light, even after reflected by reflecting mirror 4a. As such, the degree of parallelism remains unchanged.

In the embodiment of the present invention, in mirror unit 4, for the purpose of correcting spherical aberration, reflecting mirror 4a is deformed by means of piezoelectric film 4c to adjust the degree of parallelism of the reflected light. That is, to correct the spherical aberration at objective lens 5, the degree of parallelism is changed by piezoelectric film 4c, as shown by dotted lines in Fig. 1, to change the angle of incidence of the reflected light onto objective lens 5.

More specifically, the returned reflected light from disk 6 is detected by photodetector 8, and the level of the voltage to be applied to piezoelectric film 4c is set based on the detected light intensity. In photodetector 8, a ratio between light intensity at and around the center of the received light and light intensity in the periphery, other than at and around the center, is compared with a prescribed reference value, and the voltage level of the applied voltage is adjusted based on the comparison result. In the present embodiment, the returned reflected light of the laser beam irradiated on the objective lens is used to adjust the incident angle of the reflected light to the objective lens, so that the spherical aberration can be corrected taking account of, not only the thickness of the disk, but also the error in objective lens 5 and others.

As described above, it is possible to correct the spherical aberration with the simple configuration of the present invention to enable accurate detection of a reproduction signal, and thus, the precision of the optical pickup can be improved. Although the case where parallel light is irradiated onto the reflecting mirror and reflected thereby has been explained above, the present invention is not limited thereto. Even in the case where the laser beam directed to the reflecting mirror is divergent light or convergent light, the reflected light can be made to enter the objective lens at a desired angle.

Although the present invention has been described and illustrated in detail, it is clearly understood that the same is by way of illustration and example only and is not to be taken by way of limitation, the spirit and scope of the present invention being limited only by the terms of the appended claims.

## Claims

1. An optical head device correcting spherical aberration, comprising:
a light emitting diode (1) emitting a laser light;
a mirror driving unit (4) for reflecting the laser light received from said light emitting diode (1); and
a lens (5) receiving a reflected light from said mirror driving unit (4) and forming a light spot on a surface of a storage medium,
said mirror driving unit (4) including
a mirror (4a) reflecting said laser light, and
a piezoelectric element (4c) provided in said mirror (4a) opposite to a surface reflecting said laser light and changing curvature of said mirror (4a),
said mirror driving unit (4) adjusting an angle of incidence of the reflected light onto said lens (5) such that said spherical aberration is corrected at said lens (5) when said lens (5) forms the light spot,
the device further comprising:
a detector (8) detecting light intensity of the light returned from said lens (5); and
a voltage applying circuit (9) setting an applied voltage to be applied to said piezoelectric element (4c) based on the light intensity detected by said detector (8);
wherein
said detector (8) compares light intensity at and around the center of said returned light with light intensity in the periphery other than at and around the center, and instructs said voltage applying circuit (9) to adjust said applied voltage based on a result of the comparison,
said piezoelectric element (4c) is attached to said mirror (4a) to form a unimorph structure, and
said piezoelectric element (4c) is arranged in a circular shape on a surface of said mirror (4a) opposite to the surface reflecting said laser light, and expands/contracts in a radial direction to change the curvature of said mirror (4a) to set said reflected light to one of convergent light and divergent light.

2. An optical head device correcting spherical aberration, comprising:
a light emitting diode (1) emitting a laser light;
a mirror driving unit (4) for reflecting the laser light received from said light emitting diode (1); and
a lens (5) receiving a reflected light from said mirror driving unit (4) and forming a light spot on a surface of a storage medium;
said mirror driving unit (4) including
a mirror (4a) reflecting said laser light, and
a piezoelectric element (4c) provided in said mirror (4a) opposite to a surface reflecting said laser light to change curvature of said mirror (4a),
said mirror driving unit (4) adjusting an angle of incidence of the reflected light onto said lens (5) such that said spherical aberration is corrected at said lens (5) when said lens (5) forms the light spot.

3. The optical head device according to claim 2, wherein said piezoelectric element (4c) is attached to said mirror (4a) to form a unimorph structure.

4. The optical head device according to claim 2, wherein said piezoelectric element (4c) is arranged in a circular shape on a surface of said mirror (4a) opposite to the surface reflecting said laser light, and expands/contracts in a radial direction to change the curvature of said mirror (4a).

5. The optical head device according to claim 2, wherein said piezoelectric element (4c) changes the curvature of said mirror (4a) to set said reflected light to one of convergent light and divergent light.

6. The optical head device according to claim 2, further comprising:
a detector (8) detecting light intensity of the light returned from said lens (5); and
a voltage applying circuit (9) setting an applied voltage to be applied to said piezoelectric element (4c) based on the light intensity detected by said detector (8).

7. The optical head device according to claim 6, wherein said detector (8) compares light intensity at and around a center of said returned light with light intensity in the periphery other than at and around the center, and instructs said voltage applying circuit (9) to adjust said applied voltage based on a result of the comparison.
